# EUROPEAN PATENT APPLICATION

(11) **EP 1 271 092 A1**
(43) Date of publication of application: **02.01.2003**
(21) Application number: 01610067.9
(22) Date of filing: 28.06.2001
(51) Int. Cl.: G01B 5/00, G01M 11/04, G02B 7/00

(54) **System and method for designing and analysing an optical set-up**

(71) Applicant: Abitan, Haim, 2100 Copenhagen (DK); Buchhave, Preben, 3460 Bikerod (DK); Pryds, Nini, 2791 Dragor (DK)
(72) Inventor: Abitan, Haim, 2100 Copenhagen (DK); Buchhave, Preben, 3460 Bikerod (DK); Pryds, Nini, 2791 Dragor (DK)
(74) Representative: Nielsen, Henrik Sten

(57) **Abstract**

A system for designing and analysing an optical set-up comprises an optical rig comprising a co-ordinate system, an optical component of the optical set-up for positioning in the co-ordinate system, and a computing unit for receiving optical design information modelling the optical set-up and for analysing the optical design information so as to provide analysis of the optical set-up and provide positioning information for the component carrier in the co-ordinate system. The invention also relates to a method for designing and analysing an optical set-up, which method comprises the following steps: designing the optical set-up by selecting optical components and component carriers, configuring the optical set-up by interrelating the optical components and the component carriers and by interrelating component carriers to one another by defining optical design information, modelling the optical set-up on the basis of the optical design information so as to provide an analysis of the optical set-up and to provide positioning information for the component carriers in a co-ordinate system on an upper surface of an optical rig, positioning the component carriers relative to the co-ordinate system, and performing a physical validation of the modelling.

## Description

This invention relates to a system and a method for designing, analysing and implementing an optical set-up. The invention enables virtual implementation of an optical set-up, manipulation of optical elements in the optical set-up, analysis of physical and optical properties of the optical set-up, and physical realisation of the optical set-up. In particular, the invention relates to design and realisation of an optical set-up so as to enable positioning of optical components in a three-dimensional mounting rig or on a two-dimensional optical table such as optical benches or optical breadboards. In addition, the invention relates to the design and implementation of optical prototypes.

Modern optical tables that are used in laboratories at universities, colleges, technical institutions and high schools are relatively expensive and the exact mounting of the optical components is often time consuming. Typically, the top surface or skin of a honeycomb optical table is furnished with a regular array of threaded mounting holes to permit the secure attachment of optical fixtures and related devices to the table top. The breadboards of today are all exclusively based on the method in which the optical components are mounted in fixed positions (holes) on the breadboard, see for example American patent Nos. US 5,154,963; US 5,061,541; US 5,021,282; US 5,626,157; US 4,645,171; US 5,962,104 and European Patent Application No. 0 601 892, which patents and patent application hereby are incorporated by reference in below specification.

One reason for high cost of the honeycomb tables is that they require much machining to precision standards and their precision-machined surfaces and edges are often subjected to serious and costly damage. Screws may be over-tightened and when laser dyes, oils, coolants and other debris enter the interior honeycomb core section of such an optical table through the aperture table top, the result can be disastrous. Because of the bonded construction of such honeycomb tables, they cannot be disassembled for cleaning. Furthermore, the optical bench systems and prototyping breadboards of today are clumsy and inflexible, and the mounting of components, aligning of the beams and comparison of test results with theory are increasingly time consuming as systems decrease in size and increase in complexity.

European Patent Application no. EP 0 620 463 discloses a permanent magnet suspension with roller guides comprising a lens for slidable adapting on a guide rod. This European Patent Application discloses assembly means utilising the permanent magnet for applying a close-coupled magnetic force on the guide rod to hold the lens in a desired position along the rod. In this context American Patent no. US 5,821,981 discloses a magnetically preloaded air bearing motion system for an imaging device. This American Patent describes a system including a carriage for moving a scanning means along a rigid spar for reflecting an optical feed beam onto media. Neither of these documents identify the problem of perform concurrent design and analysis of optical set-ups or draw any conclusions as to utilisation of permanent magnets for optical breadboards.

American Patent no. US 5,825,558 discloses a three-dimensional universal mounting component system for optical breadboards. This American Patent describes a system of universal mounting blocks providing general mounting for use in optical research in constructing layouts for experiments and breadboard- type prototypes. This American Patent fails to provide any utilisation of permanent magnets for fixating the universal mounting component to the optical breadboards. Moreover this American Patent fails to provide a description of performing concurrent design and analysis of optical set-ups.

American Patent no. US 4,851,656 discloses a method and apparatus for enhancing optical photo-plotter accuracy. The method and apparatus improves the overall accuracy and repeatability of an optical photo-plotter, which is characterised by a controller, which determines an image position error from interferometric feedback signals. The method and apparatus is used for converting computer aided design (CAD) data to printed circuit board (PCB) art. The American Patent describes a specific implementation of a photo-plotter and fails to present any applications for designing and analysis of optical set-ups.

Solid-state laser sources and coherent light based on non-linear optical processes are under continuing development. The trend is towards complete control of the phase and amplitude of the optical beams and exact prediction of the result of interactions between light beams and optical non-linear materials. Hence the general state of the art requires optical systems to be designed by extensive use of optical computer aided design (CAD) systems, and the performance of optical systems to be analysed by means of comprehensive optical models for laser action, non-linear optical wave synthesis and simulation of dynamic phenomena. Parallel to the growing need for software tools for research and development of optical laser systems, a similar demand exists for hardware prototyping tools such as optical tables and component carriers. Just as in electronics, where circuits may be designed entirely by electronic CAD-systems, but ultimately have to be checked and prepared for production in a prototype phase, optical designs will have to be tested in a lab model and ultimately as a prototype to prepare the system for production. It is therefore essential to have a complete optical system in which the optical hardware in this case an optical table and its components, and CAD software, which contains the light beam analysis, interact simultaneously in an easy and fast manner.

It is therefor an object of the present invention to provide a system and method for designing and analysing optical set-up, which system and method comprises optical hardware for facilitating breadboarding of optical components and CAD software for providing a platform for designing and analysing the optical set-up constituted by optical components.

It is a further object of the present invention to overcome the concept of fixed positions (holes) and provide a larger degree of freedom by moving optical elements continuously and in any direction in an optical rig overcoming the restrictions of an optical breadboard limited by the positions of the holes.

An advantage of the present invention is the provision of a combination of an optical 2-D or 3-D computer aided design (CAD) system for lasers, non-linear optics and optical applications, and a compatible hardware optical breadboarding system without the constraint of holes. Thus a solution that provides an efficient and time saving tool in optical research and engineering.

The above described objects and advantage together with numerous other objects, advantages and features of the present invention which will be evident from below description of preferred embodiments of the present invention are according to a first aspect of the invention obtained by a system for designing and analysing an optical set-up, said system comprising:
(a) an optical rig comprising a co-ordinate system,
(b) an optical component of said optical set-up for positioning in said co-ordinate system, and
(c) a computing unit for receiving optical design information modelling said optical set-up and for analysing said optical design information so as to provide analysis of said optical set-up and provide positioning information for said component carrier in said co-ordinate system.

The system according to the first aspect of the present invention may further comprise a component carrier for supporting the optical component of the optical set-up in the optical rig.

In this context the terms upper and lower is to be construed relative to horizontal ground plane. The optical table is supported either directly on indirectly on its lower surface by the ground plane and provides a supporting plane for supporting the component carrier on its upper surface. The terms applied in conjunction with the component carrier are also relative to the horizontal ground plane.

Further, in this context the term set-up is to be construe as a grouping of elements co-operating to achieve a desired result. That is, the term optical set-up is to be construed as comprising at least one optical component situated on one component carrier. The optical set-up according to the first aspect of the present invention may comprise a plurality of optical components each carried on an associated component carrier on the upper surface of the optical table.

Furthermore, in this context the term component carrier is to be construed as a supporting device for an optical component in an optical set-up, which supporting device provides means for fixating the optical component in the optical set-up on an optical table. The supporting device may utilise any mechanical fixation, such as clips or bolts, for establishing a solid rigid fixation of an optical component to the optical table or may utilise non-mechanical fixation, such as magnetic or electro-static fixation, for establishing a solid rigid fixation of the optical component in the optical set-up, while simultaneously enabling an operator to move the optical component.

Additionally, in this context the term optical table is to be construed as a breadboard, bench or a workable surface enabling setting up experiments or tests to be perform on any prototypes.

The system according to the first aspect of the present invention may be utilised in a wide variety of technical fields such as optical communication, interactive education, fiber optics, biology, spectroscopy, chemistry, medicine, and environmental studies.

The optical rig according to the first aspect of the present invention may enable three-dimensional positioning of a plurality of component carriers each carrying an optical component of the optical set-up. The three-dimensional positioning may be recorded in accordance with the co-ordinate system defining three axes. The optical rig may utilise a shelf system defining a multiplicity of horizontal levels for supporting the plurality of component carriers, which shelf system allows for optical transmission between the multiplicity of levels. The shelf system may support the plurality of component carriers by an egg shaped, an elliptic, a pyramidal, a spherical or a cubic matrix comprising a series of equally spaced supporting beams defining the multiplicity of horizontal levels. Alternatively, the shelf system may support the plurality of component carriers by a matrix utilising electro-static forces, magnetic forces or a combination thereof for supporting the plurality of component carriers in any desired horizontal levitation relative to one another.

The optical rig according to the first aspect of the present invention may further comprise an optical table having an upper surface for supporting the optical set-up and the co-ordinate system placed on the upper surface so as to enable two-dimensional positioning of the optical set-up. Thus, the optical rig may in one embodiment provide two-dimensional positioning of optical set-ups and in a second embodiment provide three-dimensional positioning of optical set-ups.

The optical component according to the first aspect of the present invention may comprise optical elements such as passive elements like lenses, mirrors, dielectrics, prisms, crystals, x-y translators, active elements like lasers, detectors, modulators, amplifiers, or any combinations thereof mounted on an optical holder enabling tilting and rotation of the optical elements. The wide variety of optical elements provides a platform for providing a system according to the first aspect of the present invention rendering realistic analysis and design of optical set-ups,

The optical rig according to the first aspect of the present invention may further comprise an optical table manufactured in a magnetic material, manufactured in a non-magnetic material and comprising a magnetic upper foil layer, or manufactured in a magnetic material and comprising a non-magnetic upper foil layer. The choices of material configuration of the optical table provide a specific configuration, which matches the requirements of any optical set-up.

The optical table according to the first aspect of the present invention may comprise an upper surface and the co-ordinate system may be established on the upper surface. Alternatively, the optical table may comprise an upper surface for receiving the magnetic upper foil layer or the non-magnetic upper foil layer and the co-ordinate system may be established by incorporating the co-ordinate system in the magnetic upper foil layer or in the non-magnetic upper foil layer.

The optical rig according to the first aspect of the present invention may further comprise a plurality of optical tables each supporting an optical set-up. Thus the system may accomplish simultaneous and concurrent design and analysis of a plurality of optical set-ups placed on a plurality of optical tables. This solution provides an effective design opportunity for an operator since the operator may perform concurrent design and analysis of various optical set-ups so as to provide a time effective design phase.

The optical rig according to the first aspect of the present invention may further comprise a non-magnetic circumferential rim section for mounting and dismounting of the component carrier. The circumferential rim section allows magnetic parts such as the component carriers to be gently removed from and place on the optical table.

The optical rig according to the first aspect of the present invention may further comprise connectors establishing conduits for transmitting power to the optical components positioned on the optical table, transmitting electric and optical signals to and from the optical components positioned on the optical table, and/or transmitting gases or water to and from the optical components positioned on the optical table.

The magnetic upper foil layer according to the first aspect of the present invention may comprise a circumferential non-magnetic rim part for mounting and dismounting of the component carrier on to the optical table. As described above with reference to the circumferential rim section the non-magnetic rim part ensures that the component carriers are gently placed and removed from the optical rig. Obviously, the non-magnetic rim part is generally employed in case the optical rig is manufactured in a magnetic material.

The optical rig according to the first aspect of the present invention may further comprise an adjustment for enabling levelling of the optical rig. The adjustment may be accomplished by supporting the optical rig on feet, which may be shifted vertically so as to bring the optical rig in level. The shifting of the feet may be accomplished by threaded bolts attached to the feet and inserted into receiving threaded holes on the lower surface of the optical rig.

The optical rig according to the first aspect of the present invention may further comprise a vibration buffer for eliminating vibrations affecting the optical set-up in the optical rig. The vibration buffer may be constituted by flexible cushions mounted onto each of the above described feet.

The optical table according to the first aspect of the present invention may comprise bores so as to enable attachment of the optical table to a conventional optical table. Similarly, the optical table may further comprise a recess for receiving a clip so as to enable attachment of the optical table to a conventional optical table. The optical table may thus be used in association with conventional optical tables. This provides for utilisation of various features of present state technology in conjunction with the system according to the first aspect of the present invention.

The optical table according to the first aspect of the present invention may further comprise a first permanent magnet for magnetising the magnetic material of the optical table so as to provide an attraction between the optical table and the component carrier. The first permanent magnet is generally employed in conjunction with a component carrier manufactured in a magnetic material. The diversity of design options provides for a plurality of configurations ensuring fulfilment of a wide variety of customer requirements.

The co-ordinate system according to the first aspect of the present invention may be established on the upper surface of the optical table by etching, printing, photographic reproduction or ruling. Alternatively, the co-ordinate system may be established by incorporating the co-ordinate system in the magnetic upper foil layer or in the non-magnetic upper foil layer. Establishing the co-ordinate system by etching is primarily utilised when the optical table is manufactured in a magnetic material without an upper foil coating such as the magnetic or non-magnetic upper foil layer. On the other hand when the optical table comprises an upper foil coating the co-ordinate system is generally established in the upper foil coating by etching, photographic reproduction, ruling or printing.

The co-ordinate system according to the first aspect of the present invention may comprise a plurality of axes each defining incremental steps in a direction along each of the axes. The co-ordinate system may further comprise a plurality of separate subordinate co-ordinate systems for enabling positioning of a plurality of optical set-ups on the optical table.

The co-ordinate system may be established as a three-dimensional single Cartesian X-Y-Z co-ordinate system, a single polar R-φ-Θ co-ordinate system, a plurality of Cartesian X-Y-Z subordinate co-ordinate systems, a plurality of polar R-φ-Θ subordinate co-ordinate systems, or any combination thereof. Further, the co-ordinate system may be established as a two-dimensional single Cartesian X-Y co-ordinate system, a single polar R-φ co-ordinate system, a plurality of Cartesian X-Y subordinate co-ordinate systems, a plurality of polar R-φ subordinate co-ordinate systems, or any combination thereof. Thus any customised co-ordinate system solution is attainable. The scale of the axes may be linearly progressing in any unit of length. The unit of length of the various axes may be the same or different. The origin of the co-ordinate system or the origin of the subordinate co-ordinate system may be centred so as to provide negative and positive directions.

The component carrier according to the first aspect of the present invention may be manufactured in a magnetic material such as Iron or in a non-magnetic material such as brass, aluminium, teflon, nylon or ceramic. The choice of material for the component carrier is made on the basis of the material used for the optical table so as to provide for an attractive magnetic field between the optical table and the component carrier.

The component carrier manufactured in the non-magnetic material according to the first aspect of the present invention may further comprise a second permanent magnet positioned in a receiving bore allowing the second permanent magnet to be axially shifted in the receiving bore so as to adjust magnetic attraction between the component carrier and the magnetic material of the optical table. The second permanent magnet may be fixated in the receiving bore by fixation screws engaging the permanent magnet in a direction substantially perpendicular to the axial direction of the bore. As the second permanent magnet is shifted towards the lower surface of the component carrier supported by the upper surface of the optical table the magnetic attraction between the optical table and the component carrier increases.

Oppositely, as the second permanent magnet is shifted toward the upper surface to the component carrier the magnetic attraction between the optical table and the component carrier decreases. This action of the second permanent magnet provides for a graduation of the magnetic attraction so as to fine-tune the component carrier in accordance with an operator and the optical table. The component carrier may further comprise positioning marks on side surfaces of the component carrier for enabling positioning of the component carrier in the co-ordinate system. The positioning marks further improve the precision in positioning the component carrier in a particular desired optical set-up.

Alternatively to or in conjunction with the second permanent magnet the component carrier according to the first aspect of the present invention may further comprise a lower surface layer being manufactured in a permanent magnet material so as to establish a magnetic attraction between the optical table and the component carrier.

The magnetic attraction between the optical table and the component carrier may be adjusted so as to enable movement of the component carrier along the upper surface of the optical table and at the same time provide a secure mounting of the component carrier on the upper surface of the optical table. That is, the component carrier should be stable during fine tuning of the positioning of the optical component on the component carrier while movable when the operator wishes to do so.

The component carrier according to the first aspect of the present invention may further comprise a plurality of threaded holes for securing the optical component to the component carrier, the plurality of threaded holes placed on the component carrier so as to provide for multiple positions of the optical component on the component carrier. The optical component may thus be placed in any desired configuration allowing an operator to construct any desired optical set-up.

The component carrier according to the first aspect of the present invention may further comprise a magnetic shielding layer on an upper surface for providing a magnetic shield for the optical component attached to the upper surface of the component carrier. The magnetic shielding layer may comprise a secondary co-ordinate system on upper surface of the magnetic shielding layer for positioning of the optical component in the secondary co-ordinate system. The secondary co-ordinate system is generally utilised in conjunction with a universal mount for supporting the optical component in the secondary co-ordinate system. The universal mount may have a third permanent magnet for establishing a magnetic attraction between the universal mount and the secondary co-ordinate system and the universal mount may have a secondary magnetic shielding layer on upper surface so as to provide magnetic shielding of the optical component mounted on the upper surface of the universal mount. The component carrier comprising the magnetic shielding layer, the secondary co-ordinate system and the universal mount present a solution for placing optical components, which solution simplifies implementation of optical set-ups on a optical table tremendously.

The component carrier according to the first aspect of the present invention may further comprise a lower surface layer being manufactured in a magnetic material so as to establish a magnetic attraction between the first permanent magnet of the optical table and the component carrier. As described above the magnetic attraction between the optical table and the component carrier may be implemented in a wide variety of configurations thus fulfilling a wide number of customer requirements.

It should be understood that the selection of magnetic materials for any part of the system in conjunction with the selection of permanent magnets provides a wide variety of designs of the system according to the first aspect of the present invention. The stronger permanent magnets are utilised and the higher the magnetic permeability of the magnetic materials the stronger the attractive forces may be accomplished. The magnetic attractive force should be selected so as to enable the operator to move the component carriers while ensuring that the component carriers are resistant to shock introduced shifts of the optical table.

The component carrier according to the first aspect of the present invention may further comprise stepping motors for manoeuvring the component carrier in a two-dimensional plane. Alternatively or in combination therewith the component carrier may further comprise piezo-electric elements for manoeuvring the component carrier in the two-dimensional plane. Additionally, the component carrier may further comprise a reciprocating platform for elevating the component carrier in a direction perpendicular to the two-dimensional plane so as to enable three-dimensional positioning of the optical component carried by the component carrier. The motion of the component carrier may be controlled by the computing unit or by a separate controlling unit. Electro-magnetic, piezo-electric or mechanical actuators may accomplish the motion of the component carrier and the position of the component carrier in the optical rig may continually be reflected in an executable computer program as described below. The controlling unit may record the position of the component carrier in the optical rig by electro-magnetic, optical or mechanical position detectors providing an accurate position of the component carrier so as to enable the system to concurrently and simultaneously provide computer aided design of virtual optical set-ups and actual performance of tests of the physical optical set-ups.

The computer unit according to the first aspect of the present invention may further comprise a monitor for providing a visual presentation of the optical set-up, a memory for storing the optical design information modelling the optical set-up and storing an executable computer program, and a processing unit for executing the computer program for analysing the optical design information so as to provide analysis of the optical set-up and to provide positioning information for the component carrier in the co-ordinate system. The computer program may provide an operator two or three-dimensional visualisations of the optical set-up on the monitor so as to establish a virtual optical laboratory. Thus the operator may continuously perform simulations of optical set-ups and subsequently construct a physical optical set-up on the optical table.

The computer program according to the first aspect of the present invention may provide a window environment interface for the operator to the optical set-up in the co-ordinate system on the optical table, the window environment interface comprising means for dragging and dropping of optical components of the optical set-up. Hence an easy interface is provided for the operator so as to construct an optical set-up visualised on the monitor and subsequently perform an analysis of the particular optical set-up so as to allow an operator to verify design specifications. The results of the analysis may be presented on the monitor in accordance with an operator defined presentation.

The computer program according to the first aspect of the present invention may provide the operator with results of an analysis of the optical set-up and providing the operator with an evaluation of stability and beam properties of the optical component.

The computer program according to the first aspect of the present invention may provide the operator with access to a database of predefined standard optical components and providing the operator with an editor for creating user defined optical components and enabling the operator for storing of the user defined optical components in the database. The operator may use optical components selected in the database for the construction of a particular optical set-up, or use optical components designed entirely by the operator, or any combination thereof. The operator may define individual passive or active components, as well as individual instruments for performing various measurements such as scopes or spectrographs and/or meters. This feature provides beneficiary advantages since the operator may as a designer require particular optical components, which in fact are part of a new design.

The computer program according to the first aspect of the present invention may provide the operator with tools for laser beam analysis, polarisation analysis (Jones Matrix Analysis), resonator analysis, thermal analysis, frequency analysis, power spectrum analysis, power analysis, dynamic or transient analysis, modes analysis, beam propagation analysis including non-linear processes, diffraction and optical index variations, coupling efficiency, waveguide propagation analysis. The computer program may further provide the operator with tools for fiber optic design, and/or may further provide the operator with analysis of multiple optical beam layouts such as an optical resonator having multiple frequencies. Generally, any type of tools may be provided for analysis by integration of new subsequently developed tools or tools for any specific customer requirements.

The computer program according to the first aspect of the present invention may thus provide the operator with visualisation and analysis of a ring resonator and external beams issuing from various optical components in a ring.

The computer program according to the first aspect of the present invention may enable design and analysis of a plurality of optical set-ups positioned in the optical rig. The computer program may provide the operator with possibility for designing and analysing a wide variety of optical set-ups positioned on the plurality of optical tables.

The above described objects, advantage and feature together with numerous other objects, advantages and features of the present invention which will be evident from below description of preferred embodiments of the present invention are according to a second aspect of the invention obtained by a method for designing and analysing an optical set-up and said method comprising following steps:
(a) designing said optical set-up by selecting optical components and component carriers,
(b) configuring said optical set-up by interrelating said optical components and said component carriers and by interrelating component carriers to one another by defining optical design information,
(c) modelling said optical set-up on the basis of said optical design information so as to provide an analysis of said optical set-up and to provide positioning information for said component carriers in a co-ordinate system in an optical rig,
(d) positioning said component carries relative to said co-ordinate system, and
(e) performing a physical validation of said modelling.

The step of configuring the optical set-up according to the second aspect of the present invention may establish optical design information for interrelating component carriers such as to be part of an optical resonator.

The method according to the second aspect of the present invention may incorporate features as described with reference to the system according to the first aspect of the present invention.

The above described objects, advantage and feature together with numerous other objects, advantages and features of the present invention which will be evident from below description of preferred embodiments of the present invention are according to a third aspect of the invention obtained by a component carrier for carrying an optical component in an optical set-up and for positioning in a co-ordinate system in an optical rig comprising an optical table of magnetic material, and said component carrier comprising:
(a) a non-magnetic base section defining an upper surface, a lower surface and side surfaces,
(b) positioning marks on said side surfaces for enabling positioning of said component carrier in said co-ordinate system, and
(c) magnetic shielding layer attached to said upper surface of said non-magnetic base so as to provide a magnetic shield for said optical component carried above said magnetic shielding layer.

The component carrier according to the third aspect of the present invention provides in collaboration with an optical rig comprising a magnetic layer or manufactured in a magnetic material a platform for implementing any desired optical set-ups.

The non-magnetic base section according to the third aspect of the present invention may have a bore from the upper surface to the lower surface, which bore defines a longitudinal axis, and may further comprise a permanent magnet defining an upper end and a lower end and received in the bore allowing shifting of the permanent magnet along the longitudinal axis so as to adjust distance from the lower surface to the lower end to regulate magnetic attraction between the optical table and the component carrier. As described above with reference to a system according to the first aspect of the present invention shifting of the permanent magnet in the bore provides an advantageous and unique way of adjusting the magnetic attraction between the optical table and the component carrier.

Alternatively, the component carrier may further comprise a permanent magnet layer attached to the lower surface of the non-magnetic base section so as to establish a magnetic attraction between the optical table and the component carrier or may further comprise a magnetic layer attached to the lower surface of the non-magnetic base section so as to establish a magnetic attraction between a permanent magnet on the optical table and the component carrier.

The magnetic shielding layer according to the third aspect of the present invention may comprise a secondary co-ordinate system on upper surface of the magnetic shielding layer for positioning of the optical component in the secondary co-ordinate system, and the component carrier may further comprise an universal mount for supporting the optical component in the secondary co-ordinate system. The universal mount may have a permanent magnet for establishing a magnetic attraction between the universal mount and the secondary co-ordinate system and the universal mount may have a secondary magnetic shielding layer on upper surface so as to provide magnetic shielding of the optical component mounted on the upper surface of the universal mount.

The component carrier according to the third aspect of the present invention may incorporate features as described with reference to a system according to the first aspect of the present invention and as described with reference to a method according to the second aspect of the present invention.

The above described objects, advantage and feature together with numerous other objects, advantages and features of the present invention which will be evident from below description of preferred embodiments of the present invention are according to a fourth aspect of the invention obtained by a computer program comprising code for executing in a computing unit having a monitor for providing a visual presentation of an optical set-up, a memory for storing optical design information modelling said optical set-up and storing said computer program, and having a processing unit for executing said computer program, said computer program analysing said optical design information so as to provide analysis of said optical set-up and to provide positioning information for a component carrier in a co-ordinate system of an optical rig.

The computer program according to the fourth aspect of the present invention may incorporate features as described with reference to a system according to the first aspect of the present invention, features as described with reference to a method according to the second aspect of the present invention, and features as described with reference to a component carrier according to the third aspect of the present invention.

### Brief description of the drawings

Figure 1a and 1b, show overall schematic views of a system for designing and analysing an optical set-up comprising an optical table, a component carrier, an optical component and software according to the preferred embodiment of the present invention.
Figures 2a through 2f, show a series of three-dimensional views of an optical table and co-ordinate system (grid) according to alternative embodiments of the present invention, and figure 2g, shows a profile view of the non-magnetic frame of the optical table or the table itself.
Figures 3a through 3d, show component carriers according to alternative embodiments of the present invention.
Figure 4a, shows fixation of an optical table according to the preferred embodiment of the present invention to a frame.
Figure 4b, shows a frame for fixating an optical table according to the preferred embodiment of the present invention.
Figure 4c, shows a frame according the preferred embodiment of the present invention comprising a series of conduits.
Figure 5, shows an overall overview of the software according to the preferred embodiment of the present invention.

### Detailed description of the present invention

The invention will below be described in further detail with reference to the above listed figures.

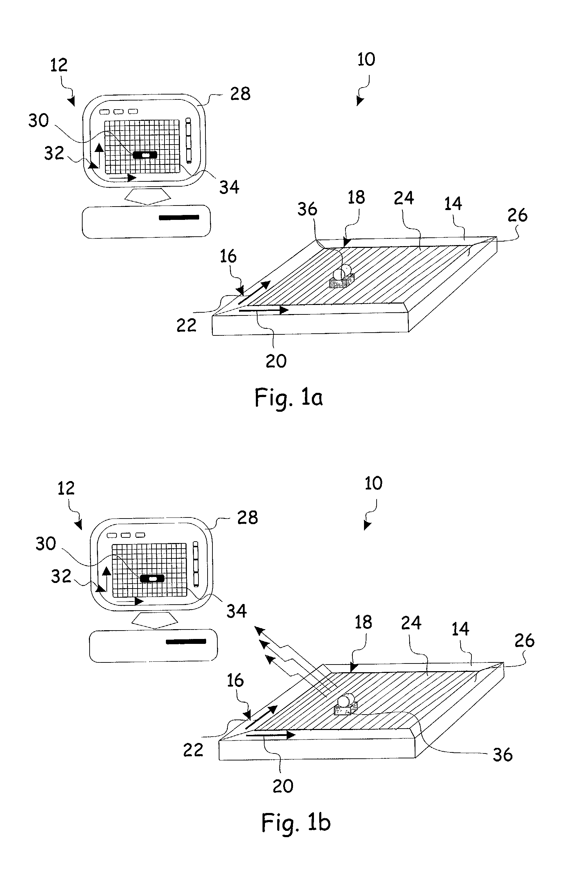

Figure 1a shows a system for designing and analysing an optical set-up according to the preferred embodiment of the present invention and designated in its entirety by reference numeral 10. The system 10 comprises an optical table 14 providing a co-ordinate system 16 for enabling exact positioning of a component carrier 18 and comprises a computer system 12 providing a platform for CAD and simulation software. The optical table 14 may be manufactured in either magnetic or non-magnetic materials or may be manufactured, as a composite construction constituted by layers of magnetic material and layers of non-magnetic materials. Further, the optical table may have any size or shape so as to comply with any customer requirements.

The co-ordinate system 16 represented by an X-axis 20 and an Y-axis 22 may be implemented according to a first embodiment of the present invention as a grid 24 established by a laminated layer or a flexible pad attached to upper surface 26 of the optical table 14. The laminated layer or flexible pad according to the present invention may additionally be applied to optical tables of the prior art such as conventional honeycomb tables. Alternatively, the grid 24 according to a second embodiment of the present invention is established by marking (etching) the co-ordinate system 16 directly onto the upper surface 26 of the optical table 14.

The system 10 may thus provide for following optional configurations of the optical table 14. Firstly, the optical table 14 made of magnetic materials with the co-ordinate system 16 etched or marked onto the upper surface 26. Secondly, the optical table 14 made of non-magnetic materials in which a magnetic laminated surface, e.g. magnetic flexible pad including the co-ordinate system 16, is attached to the upper surface 26. Finally, the optical table 14 made of magnetic materials with a non-magnetic laminated surface (or flexible pad for example made of aluminium) including the co-ordinate system 16 is attached to the upper surface 26.

The computer system 12 according to the preferred embodiment of the present invention comprises a central processing unit for receiving and processing input data, a memory for storing input and processed data and a monitor 28 displaying information. The computer system 12 executes the CAD software, which in turn presents the exact position of the component carrier 18 as a virtual component carrier 30 on the monitor 28 in a virtual co-ordinate system 32 having a virtual grid 34.

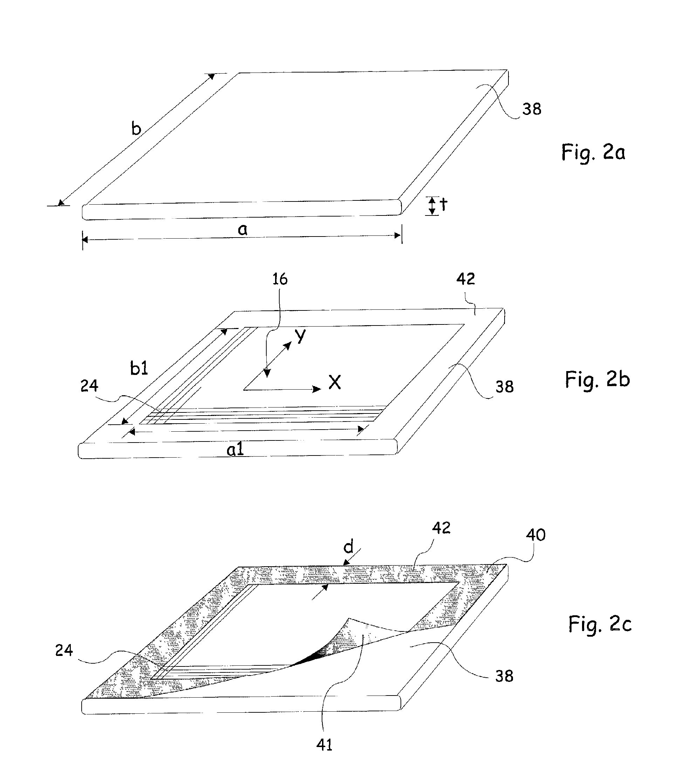

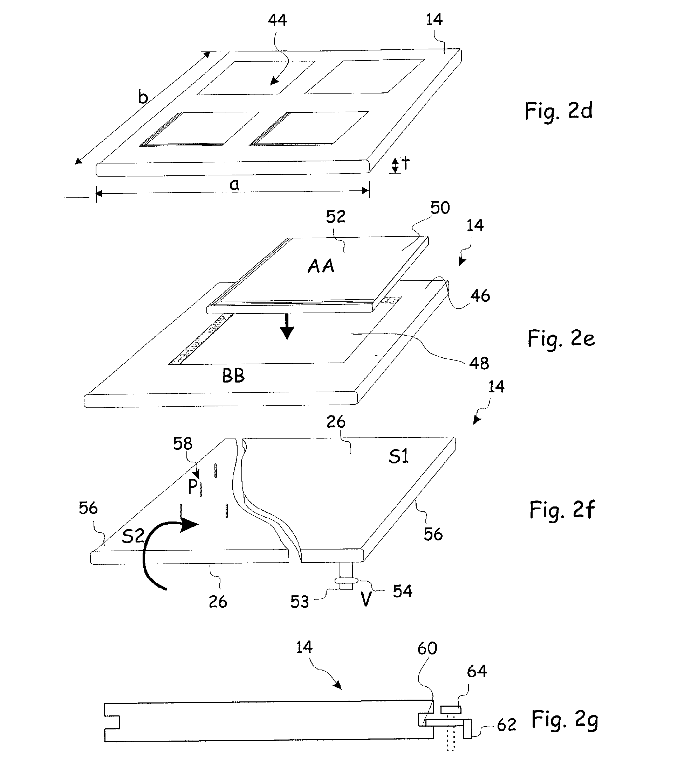

The preferred embodiment of the present invention incorporates magnetic positioning of optical hardware such as the component carrier 18 or a plurality of component carries on the optical table 14 comprising the co-ordinate system 16 on the top surface 26 of the optical table 14. The optical table 14 comprises a base plate 38, shown in figure 2, furnished with the grid 24 (a ruled x-y co-ordinate system), which enables exact positioning of an optical component 36 carried by the component carrier 18 in an universal optical mount on the top surface. The purpose of the CAD software is among others to facilitate the accurate positioning of the optical component 36, linking the positioning of the optical component 36 to the optical table 14. Obviously, by combining a plurality of optical components such as the optical component 36 a complete optical set-up comprising any configuration of optical hardware may be implemented. The CAD software may perform simulations based on the desirable positions of the plurality of optical components and based on the type of each of the individual optical component in the optical set-up. Naturally, the simulations by the CAD software are not only limited to this type of system 10 but may also be used in collaboration with conventional honeycomb breadboards with conventional optical mounts.

The base plate 38 is made of either a non-magnetic or a magnetic material and may be provided in any shape and size (breadth length and thickness). The x-y co-ordinate system 16 is marked on the upper surface of the base plate 38 in order to enable an exact positioning of the component carrier 18. The co-ordinate system 16 is either marked directly on the upper surface of the base plate 38 as shown in figure 2b or marked on a laminated layer or a flexible pad designated by reference numeral 40 in figure 2c, which laminated layer or flexible pad 40 may be in a third embodiment of the present invention be attached to the upper surface of the base plate 38 by adhesion. In a fourth embodiment of the present invention an outside border 42 of the optical table 14 (outside the co-ordinate system 16) is made of a non-magnetic material so as to allow sundering of the component carrier 18 from the optical table 14 as well as easily re-adhering the component carrier 18 onto the upper surface 26 of the optical table 14 in this area.

Further, in the preferred embodiment of the present invention, the optical hardware is exactly or symbolically modelled and displayed on the monitor 28 and conversely, the result of the CAD layout and analysis may be implemented in optical hardware in a simple way aided and directed by the CAD software. The CAD software is designed to provide the user with a complete tool on how to construct any optical set-up on an optical table. The CAD software is constructed in such a way that it forms an interactive window environment with the optical table 14. As a results it will considerably reduce the time needed to set up any optical hardware of different optical components on the optical table 14.

An important feature of the system 10 is the correspondence between the optical hardware and the CAD software. This is implemented in a number of ways. Firstly, the CAD software displays the 2 or 3-D beam pattern and optical component layout using realistic looking graphics. This provides not only an overview of the optical beam path, but also a way to ensure that the optical components physically fit into the optical set-up. Secondly, the CAD-layout is aided by the virtual co-ordinate system 32 on the monitor 28 and the corresponding co-ordinate system 16 on the optical table 14. The CAD software comprises a database including co-ordinate information (position and angle) for all the optical components and the beam paths, and co-ordinates of certain markers on the component carriers may be read from the CAD software. This enables exact positioning of the optical components on the optical breadboard in accordance with the layout resulting from the CAD-design. Thirdly, the beam analysis carried out on-line in the CAD-system enables continuous monitoring of the stability of optical resonators and in addition enables analysis of the laser beam outside of an optical resonator. The drag-and-drop feature of the CAD software enabling the continuos virtual experimentation with beam paths is in a fifth embodiment of the present invention implemented directly in the optical hardware by sliding the component carriers across the optical table 14.

The applications for the system 10 include (but is not limited to) laser design, optical measurements, spectroscopy and chemical analysis, medical therapy and diagnostics, optical communication, optical signal- and data processing.

Figure 1b, shows a modification of the system 10 as shown in figure 1a. The position of the component carrier 18 is continuously updated in the computer system 12 by receiving the actual position of the component carrier 18 from the component carrier 18 transmitting positioning data to the computer system 12. The transmission between the component carrier 18 and the computer system 12 may be accomplished by using radio waves or infrared light. In this way the calculations made by the computer system 12 are carried on in situ when the operator moves the component carrier 18.

Figure 2a through 2g show alternative embodiments of the optical table 14. Figure 2a shows the base plate 38 defining a length designated by 'a', a width designated by 'b' and a thickness designated by 't'. The length 'a' and the width 'b' may be in a range between 10 cm to 100 cm such as ranges 20 cm to 80 cm or 40 cm to 60 cm, and/or alternatively, the length 'a' and the width 'b' may be in ranges such as 10 cm to 40 cm, 40 cm to 60 cm, 60 cm to 100 cm, or any combination thereof. The thickness 't' may be in the range 0.1 cm to 5 cm depending on material and usage of the optical table 14. The thickness 't' may be in ranges such as 0.5 cm to 4 cm or 1 cm to 3 cm and/or alternatively, the thickness 't' may be in ranges such as 0,1 cm to 1.5 cm, 1.5 cm to 3.5 cm, 3.5 cm to 5 cm or any combination thereof.

Figure 2b shows the base plate 38 having the co-ordinate system 16 etched onto the upper surface. The co-ordinate system 16 and in particular the grid 24 has a length designated by 'a1' and a width designated by 'b1'. The length 'a1' and the width 'b1' are according to the preferred embodiment smaller than the length 'a' and the width 'b' of the base plate so as to define the outside border 42. The outside border has a width designated by 'd' in figure 2c, which width 'd' has a size so as to allow for the largest of the component carriers to by readily removed from the optical table 14.

Figure 2c, further shows the base plate 38 comprising an upper layer 41 including the grid 24 and the co-ordinate system 16. The upper layer 41 may be implemented as an adhesive foil (e.g. aluminium in configurations having a non-magnetic upper surface layer) or plastic sheet glued directly onto the upper surface of the base plate 38. The co-ordinate system 16 may be printed or etched onto the adhesive foil or plastic sheet.

Generally, according to the preferred embodiment of the present invention the co-ordinate system 16 is supplied in any desired size, colour and scale. The co-ordinate system 16 is further supplied utilising any desired units such as millimetres or inches. Additionally, the co-ordinate system 16 is supplied with any desired texts or legends.

Figure 2d shows a further embodiment of the present invention of the optical table 14 having a plurality of co-ordinate systems designated in entirety by reference numeral 44 so as to allow for multiple configurations of optical hardware on the optical table. The plurality of co-ordinate systems 44 may be marked on the upper surface of the base plate 38 of the optical table 14 by etching or alternatively be adhered to upper surface of the base plate 38 of the optical table 14 as imprints on a laminated layer or flexible pad. The plurality of co-ordinate systems 44 may have identical or different size, colour and scale and have identical or different text or legends.

Figure 2e shows assembling of the optical table 14 according to a sixth embodiment of the present invention having a non-magnetic outside border 46 comprising a recess 48 for receiving a magnetic plate 50 comprising a grid 52 on its upper surface. Alternatively, the recess 48 may be substituted by a hole. The configuration shown in figure 2e provides a smooth interface between the magnetic grid 52 and the optical table 14 so as to allow for a smooth de-coupling of the component carriers from the magnetic grid 52 to the non-magnetic outside border 46.

Figure 2f shows an optical table 14 according to a seventh embodiment of the present invention, which optical table 14 comprises a levelling adjustment 53 for bringing the optical table 14 in level and comprises a vibration unit 54 for dampening vibrations of the upper surface of the optical table 14. The levelling adjustment 53 and the vibration unit 54 are situated on the lower surface 56 of the optical table 14. Further, the lower surface 56 of the optical table 14 comprises a plurality of metal pins 58 receivable into an array of holes in a conventional honeycomb optical table so as to enable the optical table 14 to be integrated into the honeycomb optical table. It should be noted that the optical table 14 is shown in figure 2f as two sections designated by S1 and S2. The section S1 shows the upper surface 26 of the optical table 14 as the upward facing surface whereas the section S2 shows the lower surface 56 as the upward facing surface. This simply provides a view of the upper and lower surfaces 26, 56 respectively of the optical table 14.

In an alternative embodiment of the present invention the optical table 14 comprises few scattered countersunk holes thus enabling the optical table 14 to be fastened to a conventional honeycomb optical table by tightening bolts. In a further alternative embodiment of the present invention the optical table 14 comprises a canal 60 parallel to the upper surface of the optical table, which canal 60 receives a clipper 62 fixable with a bolt 64 to a conventional honeycomb optical table.

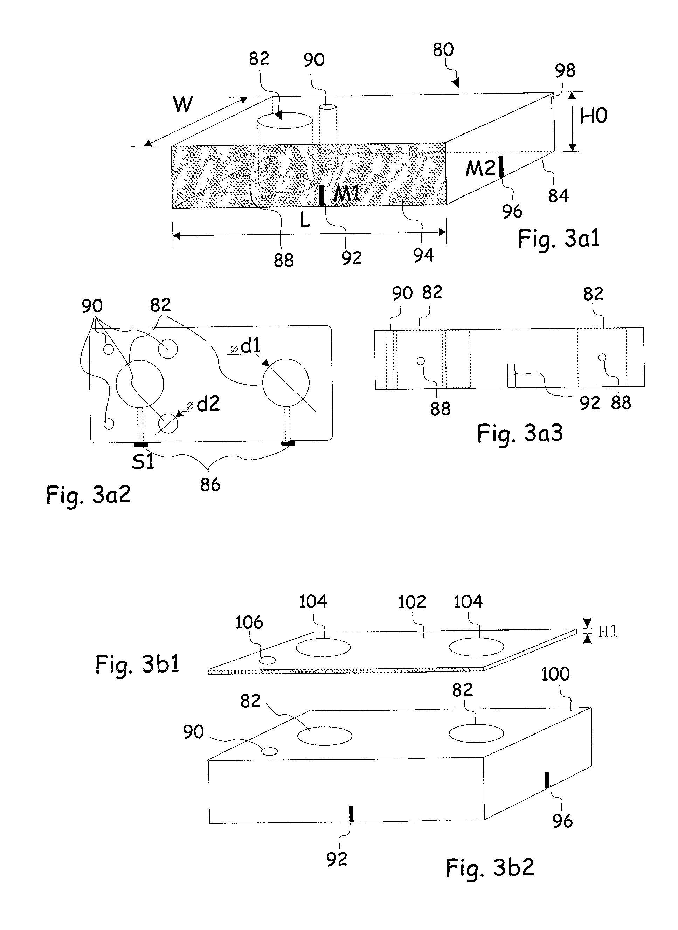

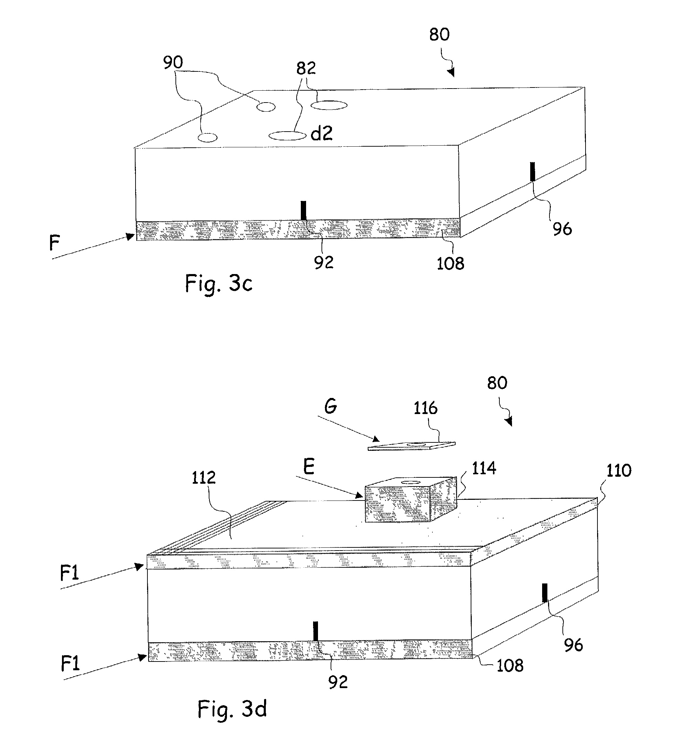

Figure 3a through 3d shows alternative component carriers according to the present invention designated in their entirety by reference numeral 80. The component carrier 80 may be designed to have any shape or dimension so as to fulfil any customer requirements.

The component carrier 80 is in an eighth embodiment of the present invention implemented in a non-magnetic material such as Brass or Aluminium having a permanent magnet integrated into bores 82 so as to establish a magnetic circuit when the component carrier 80 is positioned on the optical table 14. Alternatively, the component carrier 80 is in a ninth embodiment of the present invention implemented in a magnetic material such as Iron without having the permanent magnet integrated into the bores 82 while the optical table 14 is magnetised so as to attract the component carrier 14. The magnetic field established between the component carrier 80 and the optical table 14 in either configuration connects the lower surface 84 of the component carrier 80 and the optical table 14 and provides a force that holds the component carrier 80 to the optical table 14, thus securing the component carrier 80 to the grid 24 of the optical table 14. This enables component carrier 80 to be positioned freely on the base plate 38 and to be moved in any direction continuously without the limitation of holes. The attraction between the base plate 38 and the component carrier 80 is designed in such a way that the carrier stays securely in position during normal operation with the system 10, yet, under application of sufficient force, the component carrier 80 slides over the base plate 80 for convenient positioning of the optical component mounted onto the component carrier 80.

The permanent magnets integrated into the bores 82 of the eighth embodiment of the present invention have an overall axial length smaller than the thickness of the component carrier 80. Further, the permanent magnets may be Neodymium, Alnico or CoRe or any other type of permanent magnets determined in accordance with the required magnetic field strength for achieving a firm fixation of the component carrier 80 relative to the optical table 14, while allowing for the sliding movement of the component carrier 80 over the upper surface of the optical table 14.

The bores 82 are shown in figures 3a1, 3a2 and 3a3 as having a circular cross-sectional shape, however, the bores 82 may in alternative embodiments have rectangular, elliptical, triangular shape or any combination thereof.

The permanent magnets are secured in the bores 82 by bolts 86 tightening the permanent magnets in a direction perpendicular to the axis of the permanent magnets through treaded bores 88. The permanent magnets may be axially shifted and secured so as to define a space between the permanent magnets and the optical table 14, hence accomplishing a variable strength magnetic link between the component carrier 80 and the optical table 14.

Additionally, the component carrier 80 comprises a plurality of threaded mounting bores 90 axially parallel to the bores 82 holding the permanent magnets. The threaded mounting bores 90 receive corresponding bolts of optical components to be mounted onto the component carrier 80. The plurality of threaded mounting bores 90 are scattered around the position of the permanent magnets so as to enable a flexible positioning of optical components onto the upper surface of the component carrier 80. In an alternative embodiment of the present invention the threaded mounting bores 90 may be substituted entirely or partly by threaded mounting recesses.

The component carrier 80 according to the embodiments of the present invention further comprises a first mark 92 on a first side surface 94 and a second mark 96 on a second side surface 98 in order to enable the exact positioning of the component carrier 80 on the optical table 14. The component carrier 80 may be marked on all four side surfaces to enable the operator having an arbitrary view of the optical set-up to position the component carrier 80 accurately. The first and second mark 92 and 96 assist an operator to place the component carrier 80 in accordance with information obtained from the CAD software. In particular, the CAD software provides a position and angle of the component carrier 80, which the operator utilises for placing the component carrier 80 on the grid 24 of the optical table 14.

To eliminate the magnetic field affecting the optical set-up the upper surface 100 of the component carrier 80 is supplied with a magnetic shielding layer 102. The material of the magnetic shielding layer 102 has a high permeability so as to prevent magnetic flux to affect optical components mounted above the magnetic shielding layer 102. The thickness of the magnetic shielding layer 102 may be in the range between 0.1 mm to 10 cm, such as ranges 0.1 mm to 10 mm or 0.5 mm to 5 mm, however, the thickness used in the preferred embodiment of the present invention is 1 mm. The thickness of the magnetic shielding layer 102 depends in particular on which type of permanent magnets is used and on the permeability of the magnetic shielding layer 102. The magnetic shielding layer 102 comprises bores 104 and 106 positioned co-axially relative to bores 82 and threaded mounting bores 90.

Figure 3c shows an alternative embodiment of the present invention having the component carrier 80 comprising a lower surface layer 108, which may be implemented as a permanent magnetic lower surface layer 108 such as described with reference to the above mentioned eighth embodiment of the present invention. The permanent magnetic lower surface layer 108 is implemented by a permanent magnetic material pad providing an attracting force between the component carrier 80 and the magnetic optical table 14. Alternatively, the lower surface layer 108 may be implemented as a magnetic lower surface layer 108 achieved by applying a magnetic material pad having the optical table providing an attractive force between the component carrier 80 and the optical table 14.

The component carrier 80 is, in general, manufactured symmetrically so that any surface of the component carrier 80 may be used as contacting surface with the optical table 14.

The embodiment described with reference to figure 3c may additionally be supplied with an upper magnetic surface layer 110 as shown in figure 3d. The upper magnetic surface layer 110 may comprise a co-ordinate system 112 so as to enable further detailed positioning of the optical component through a universal magnetic mount 114. The combination of a movable component carrier 80 on the optical table 14 and the movable universal magnetic mount 114 provides an exact optical positioning system. The universal magnetic mount 114 is magnetised for providing an attractive force between the universal magnetic mount 114 and the upper magnetic surface layer 100. Hence a secondary magnetic shielding layer 116 is required. The secondary magnetic shielding layer 116 accomplishes magnetic shield of the optical component mounted on the universal magnetic mount 114.

The optical components themselves such as mirrors, dielectrics, prisms, crystals or x-y translators etc., which are available in the market and usually mountable on a commercial optical holder, are mounted on the component carrier 80 in a novel manner. The optical components are mounted on the component carrier 80 by either utilising magnetic force as described above with reference to figure 3d or by bolting the optical component to the component carrier 80. The various optical components subsequent to mounting are fine adjusted on the upper surface of the component carrier 80. In addition, the optical components may be fine adjusted by the conventional methods such as precision screws, micrometer screws, motorised screws, and miniature motorised linear positioning devices. Furthermore, micro-electro-mechanical systems (MEMS) may be utilised for a detailed and exact positioning. The optical components are transferable from one component carrier 80 to another, or they can be mounted permanently on a component carrier 80 where particularly desired.

The magnetic mounting of the component carrier 80 on the optical table 14 eliminates the impractical and time consuming task of mounting the optical components by clamps and screws that fit into a threaded hole pattern in an optical breadboard, which is the conventional way of using an optical breadboard.

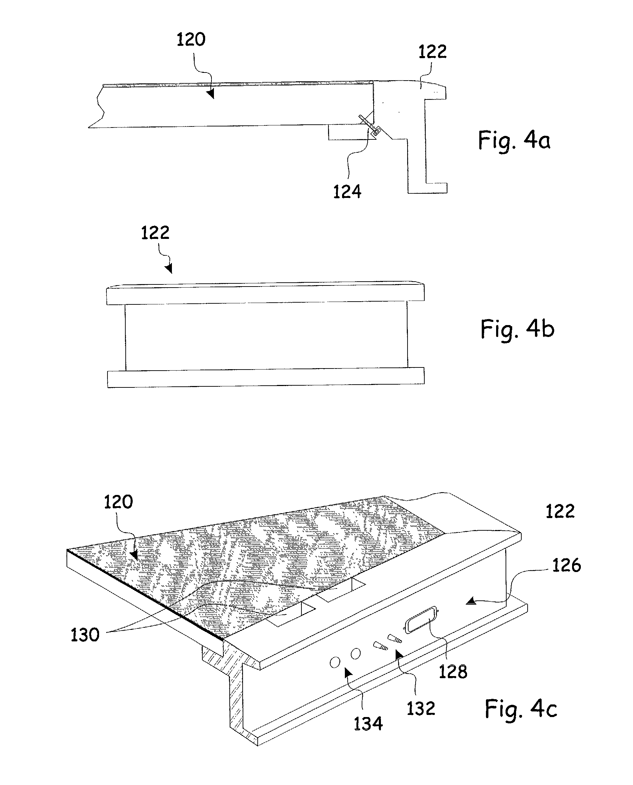

Figure 4a shows a cross-sectional view of fixation of an optical table 120 to a frame 122 according to the preferred embodiment of the present invention. The frame 122 provides for fixating the optical table 120 through bolts 124. The frame 122 is generally implemented in non-magnetic materials so as to ensure that the frame 122 does not influence the optical table 120.

Figure 4b shows a side view of the frame 122 according to the preferred embodiment of the present invention being implemented having a profile providing rigidity to the optical table 120. The frame 122 further enables the optical table 120 to be mounted onto conventional optical tables.

Figure 4c shows a three-dimensional cut view of the frame 122 and the optical table 120. In particular, figure 4c shows a conduit designated in entirety by reference numeral 126. The conduit 126 comprises a connector 128 for communicating data between the optical table 120 and the computer 12. The connector 128 may be a serial port such as a 25-pin D-type connector carrying EIA-232 signals or a 9-pin D-type carrying a subset of EIA-232. Alternatively, the connector 128 may be a parallel port such as a SCSI being a processor-independent standard for system-level interfacing between a computer and intelligent devices.

Further, the conduit 128 comprises air ducts 130 for providing air or any gas in compressed or non-compressed state to the optical set-up or optical set-ups positioned on the optical table 120.

Further, the conduit 128 comprises fibre optical connections 132 for communicating data between the optical set-up or the optical set-ups positioned on the optical table 120 and the computer system 12.

Additionally, the conduit 128 comprises electric connectors 134 for providing power to the optical set-up or optical set-ups positioned on the optical table 120. Further, the conduit 128 may comprise fluid connections for providing fluid to the optical set-up or optical set-ups positioned on the optical table 120. The fluid may be utilised for cooling optical components placed on the optical table 120.

Alternatively, the electric connectors 134 may provide communication of data between the optical set-up or optical set-ups and the computer system 12. The electric connectors 134 may even further provide power to the optical set-up or optical set-ups simultaneously to providing communication between the optical set-up or optical set-ups and the computer system 12. This may be accomplished by utilising general modulation techniques overlaying data on the power signals.

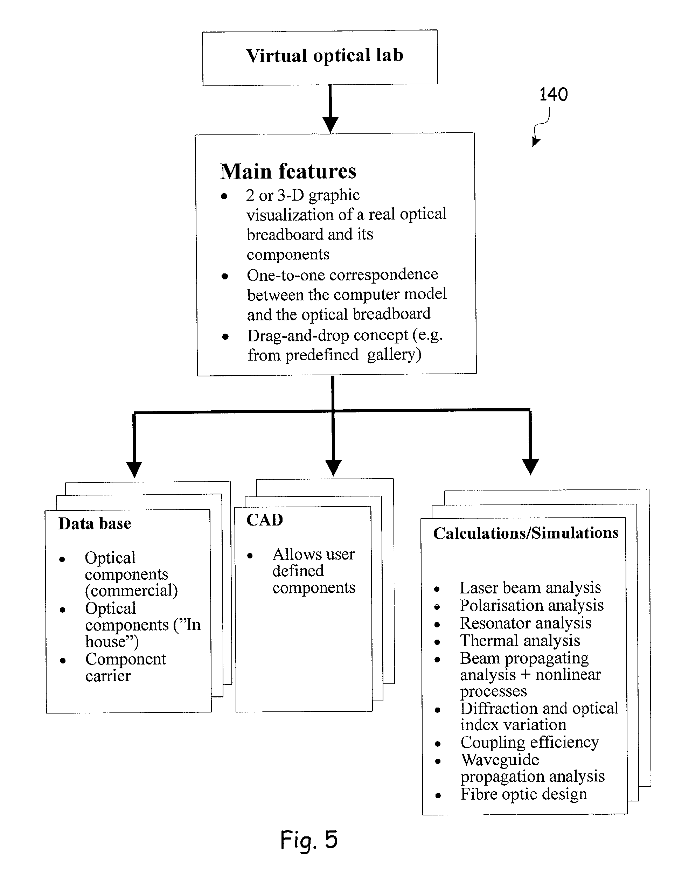

Figure 5 shows an overall presentation of CAD software according to the preferred embodiment of the present invention designated in its entirety by reference numeral 140. The CAD software 140 is designed to provide the operator with a complete and realistic tool for simulation of the mechanical and optical components on the optical table 14. There is full correspondence between the CAD software 140 and the optical table 14 allowing the operator to visually lay out and design the optical set-up on the computer system 12 and with a minimum of effort set up the optical components on the optical table 14.

The CAD software 140 provides 2 or 3-D graphic visualisation of the optical hardware and the optical beam layout. In other words the CAD software 140 is aimed to be a fully "virtual optical lab".

The CAD software 140 is constructed in such a way that it forms a comfortable and easy interactive window environment (interface) with the optical table 14 where either an inexperienced or experienced operator may operate the program. The CAD software 140 considerably reduces the time it takes to set up different optical components on the optical table, i.e. the interface of the CAD software is mainly operated with the concept of drag-and-drop while all the calculations are invisible and made in the background of the interface.

The CAD software 140 allows simulation of experiments and evaluation of stability and beam properties of optical resonators in a one-to-one correspondence between computer model and the optical table 14.

The results of the calculations of the program allow exact placement and positioning of the component carriers 80 on the optical table 14 at co-ordinates and angles provided by the CAD software.

The optical component and/or the component carrier gallery in the CAD software 140 comprises a number of predefined standard optical components, but the software allows also the construction of user defined optical components.

The system 10 enables analysis of multiple optical beam layouts, e.g. resonator with multiple frequencies (frequency doubling, 3-beam optical parametric interaction) and provides visualisation and analysis of ring resonator and external optical beams issuing from the various optical components of the ring (by reflection or transmission from the optical surfaces).

In an alternative embodiment of the present invention the system 10 incorporates combinations of optical and mechanical CAD-systems interacting with optical analysis software for laser beam analysis, polarisation analysis, resonator analysis, thermal analysis, modes analysis, beam propagation analysis including non-linear processes, diffraction and optical index variations, coupling efficiency, wave-guide propagation analysis, fiber optic design.

## Claims

1. A system for designing and analysing an optical set-up, said system comprising:
(a) an optical rig comprising a co-ordinate system,
(b) an optical component of said optical set-up for positioning in said co-ordinate system, and
(c) a computing unit for receiving optical design information modelling said optical set-up and for analysing said optical design information so as to provide analysis of said optical set-up and provide positioning information for said component carrier in said co-ordinate system.

2. A system according to claim 1 further comprising a component carrier for supporting said optical component of said optical set-up in said optical rig.

3. A system according to any of claims 1 or 2, wherein said optical set-up comprising a plurality of optical components each carried on an associated component carrier in said optical rig.

4. A system according to any of claims 1 to 3, wherein said optical rig further comprising an optical table being manufactured in a magnetic material, being manufactured in a non-magnetic material and comprising a magnetic upper foil layer, or being manufactured in a magnetic material and comprising a non-magnetic upper foil layer.

5. A system according to any of claims 1 to 4, wherein said optical rig further comprising a non-magnetic circumferential rim section for mounting and dismounting of said component carrier.

6. A system according to any of claims 4 or 5, wherein said optical table further comprising a first permanent magnet for magnetising said magnetic material of said optical table so as to provide an attraction between said optical table and said component carrier.

7. A system according to any of claims 1 to 6, wherein said component carrier further comprising a lower surface layer being manufactured in a permanent magnet material so as to establish a magnetic attraction between said optical table and said component carrier.

8. A system according to any of claims 1 to 7, wherein said computer unit further comprising a monitor for providing a visual presentation of said optical set-up, a memory for storing said optical design information modelling said optical set-up and storing an executable computer program, and a processing unit for executing said computer program for analysing said optical design information so as to provide analysis of said optical set-up and to provide positioning information for said component carrier in said co-ordinate system.

9. A method for designing and analysing an optical set-up and said method comprising following steps:
(a) designing said optical set-up by selecting optical components and component carriers,
(b) configuring said optical set-up by interrelating said optical components and said component carriers and by interrelating component carriers to one another by defining optical design information,
(c) modelling said optical set-up on the basis of said optical design information so as to provide an analysis of said optical set-up and to provide positioning information for said component carriers in a co-ordinate system on an upper surface of an optical rig,
(d) positioning said component carries relative to said co-ordinate system, and
(e) performing a physical validation of said modelling.

10. A component carrier for carrying an optical component in an optical set-up and for positioning in a co-ordinate system on a optical rig comprising a optical table of magnetic material, and said component carrier comprising:
(a) a non-magnetic base section defining an upper surface, a lower surface and side surfaces,
(b) positioning marks on said side surfaces for enabling positioning of said component carrier in said co-ordinate system, and
(c) magnetic shielding layer attached to said upper surface of said non-magnetic base so as to provide a magnetic shield for said optical component carried above said magnetic shielding layer.

11. A component carrier according to claim 10, wherein said non-magnetic base section having a bore from said upper surface to said lower surface, which bore defines a longitudinal axis, and further comprising a permanent magnet defining an upper end and a lower end and received in said bore allowing shifting of said permanent magnet along said longitudinal axis so as to adjust distance from said lower surface to said lower end to regulate magnetic attraction between said optical table and said component carrier.

12. A component carrier according to claim 10, further comprising a permanent magnet layer attached to said lower surface of said non-magnetic base section so as to establish a magnetic attraction between said optical table and said component carrier.

13. A component carrier according to claim 10, further comprising a magnetic layer attached to said lower surface of said non-magnetic base section so as to establish a magnetic attraction between a permanent magnet on said optical table and said component carrier.

14. A computer program comprising code for executing in a computing unit having a monitor for providing a visual presentation of an optical set-up, a memory for storing optical design information modelling said optical set-up and storing said computer program, and having a processing unit for executing said computer program, said computer program analysing said optical design information so as to provide analysis of said optical set-up and to provide positioning information for a component carrier in a co-ordinate system of an optical rig.
